# EUROPEAN PATENT APPLICATION

(11) **EP 4 603 302 A2**
(43) Date of publication of application: **20.08.2025**
(21) Application number: 25181171.7
(22) Date of filing: 13.12.2022
(51) Int. Cl.: B60C 9/18

(54) **TRUCK TIRE**

(30) Priority: 16.12.2021 US 202163265534 P; 28.11.2022 US 202218059012
(62) Divisional of application: 22213039.5
(71) Applicant: The Goodyear Tire & Rubber Company, Akron, OH 44316 (US)
(72) Inventor: PASSANTE SPACCAPIETRA, Ettore, L-9070 Ettelbruck (LU); JOUBERT, Paul Benoit, L-2714 Luxembourg (LU); KRIER, Roland Willibrord, L-6622 Wasserbillig (LU); MANOGARAN, Arun Prasath, L-7740 Colmar-Berg (LU); CAMBRON, Anne-France Gabrielle Jeanne-Marie, L-7562 Mersch (LU); SAAVEDRA, Kevin Rafael, L-7256 Walferdange (LU)
(74) Representative: Kutsch, Bernd

(57) **Abstract**

A pneumatic tire (10) for use on trucks is disclosed. The tire has a tread (12), sidewalls, a carcass, a pair of beads, and a belt structure (50) located radially inward of the tread (12). The belt structure (50) comprises a first working belt (54) and a second working belt (56) , the first working belt (54) being located radially inward of the second working belt (56), wherein the angle of the first and second working belts (54, 56) range from 10 degrees to 50 degrees from the circumferential direction, wherein a zigzag belt (58) or a relatively low angle belt (70) is located radially inward of the first working belt (54) or between the first working belt (54) and the second working belt (56), and wherein a rubber spacer layer (60, 80) is located between the zigzag belt (58) and the carcass of the tire (10) or between the first working belt (54) and the carcass of the tire (10).

## Description

### Field of the Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

### Summary of the Invention

The invention relates to a tire in accordance with claim 1.

Dependent claims refer to preferred embodiments of the invention.

In one preferred aspect, the invention provides in a pneumatic tire for use on trucks, the tire having a tread, sidewalls, and a pair of beads, and a belt reinforcement structure located radially inward of the tread, the belt structure wherein the first working belt is located radially inward of the second working belt, wherein the angle of the first and second working belts range from 10 degrees to 50 degrees from the circumferential direction, wherein a zigzag belt is located radially inward of the first working belt, and wherein a rubber spacer layer is located between the zigzag belt and a carcass of the tire.

In another preferred aspect, the invention provides a pneumatic tire for use on trucks, the tire having a tread, sidewalls, and a pair of beads, and a belt reinforcement structure located radially inward of the tread, the belt structure wherein the first working belt is located radially inward of the second working belt, wherein the angle of the first and second working belts range from 10 degrees to 50 degrees from the circumferential direction, wherein a zigzag belt is located between the first working belt and the second working belt, and wherein a rubber spacer layer is located between the first working belt and a carcass of the tire.

In another preferred aspect, the invention provides a pneumatic tire for use on trucks, the tire having a tread, sidewalls, and a pair of beads, and a belt reinforcement structure located radially inward of the tread, wherein the belt reinforcement structure includes a first working belt located radially inward of a second working belt, wherein an angle of the first and second working belts range from 10 degrees to 50 degrees from the circumferential direction, wherein a low angle belt is located between the first working belt and the second working belt, and wherein a rubber spacer layer is located between the first working belt and a carcass of the tire.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" means at least two annular layers or plies of parallel cords, woven or unwoven, underlying the tread, unanchored to the bead.

"Breakers" or "Tire Breakers" means the same as belt or belt structure or reinforcement belts.

"Circumferential" means lines or directions perpendicular to the axial direction or perpendicular within +/- 5 degrees to the axial direction.

"Cord" means one of the reinforcement strands, including fibers or wires, which are used to reinforce plies.

"Extensible" means a cord, cable or wire having a relative elongation of greater than 0.2% at 10% of the breaking load, when measured from a cord, cable or wire extracted from a cured tire. The tensile measurements such as the load at break (maximum load in N), strength at break (in MPa) and elongation at break (total elongation in %) are performed in tension in accordance with ISO 6892-1B (2019) at a pre-load no more than 10 MPa tested on a cord, cable or wire when taken from a cured tire.

"Ply" means a cord-reinforced layer of elastomer-coated, radially deployed or otherwise parallel cords.

"Radial" and "radially" mean directions radially toward or away from the axis of rotation of the tire.

### Brief Description of the Drawings

The invention will be described by way of example and with reference to the accompanying drawings in which:
FIG. 1A and FIG. 1B are cross-sectional views of a first embodiment of a tire of the present invention;
FIG. 2A and FIG. 2B are cross-sectional views of a second embodiment of a tire of the present invention; and
FIG. 3 is a cross-sectional view of a third embodiment of a tire of the present invention.

### Detailed Description of Preferred Embodiments of the Invention

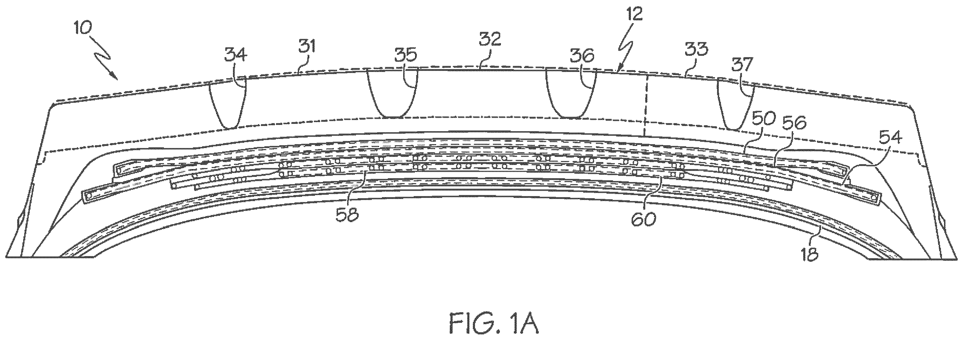

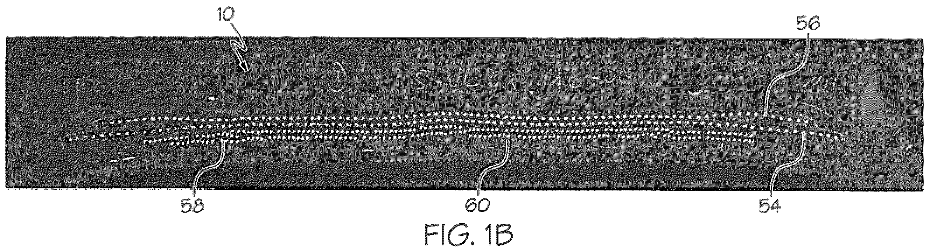

FIG. 1A and FIG. 1B illustrate a first embodiment of a pneumatic tire, suitable for use as a truck tire. The tire 10 has a tread 12 with a non-skid depth D. The tire tread 12 may comprise a plurality of circumferentially continuous ribs, which may vary, but are shown for example as ribs 31, 32 and 33. Positioned between each rib is a circumferential groove 34, 35, 36, 37 which are preferably continuous. The tread may also comprise optional sipes (not shown). The tread pattern is not limited to same, and may comprise, for example, a plurality of blocks and grooves (not shown).

The tire 10 further includes a belt package 50 which is located between the tread and the one or more plies 18 of the carcass of the tire 10. The ply 18 and the belt reinforcing structure 50 are made from cord reinforced elastomeric material, wherein the cords are preferably steel wire or polyamide filaments and wherein the elastomer is preferably rubber.

The belt reinforcing package 50 includes a pair of extensible working belts, 54, 56. i.e., they are belts comprising parallel extensible cords with the angle of these cords defining the breaker angle. Belt 54 is located radially inwards of belt 56. Belt 54 has a width which is preferably equal or about equal (+/- 5 percent) to the tread arc width of the tire 10. Preferably, belt 54 has a belt width equal or substantially equal (+/- 5 percent) to the tread arc width. The breaker angle of belt 54 is between 10 and 50 degrees, preferably with a right orientation.

Belt 56 is the second member of the working belt pair. Belt 56 has a width less than the width of belt 54 (the other working belt) and is preferably radially outward of belt 54. Preferably, the belt 56 has a width less than the width of belt 54 by a step off, which may range from 10 to 20 mm. Belt 56 has a breaker angle between 10 and 50 degrees, preferably with a left orientation. Preferably, belt 56 has the same breaker angle than belt 54 but an opposite angular orientation as belt 54.

As shown in FIG. 1A and FIG. 1B, the belt structure 50 further comprises a third belt 58 which is in a preferred embodiment located radially inward of the working pair belts 54, 56. In a preferred embodiment, the third belt 58 is a zigzag belt reinforcing structure formed by a reinforcement strip of one or more cords, wherein the reinforcement strip is laid up in an alternating pattern from one lateral end of the tire building drum to a second lateral end of the tire building drum, wherein the reinforcement strip extends at an angle between 5° and 30° between lateral edges. The resulting zigzag belt reinforcing structure preferably results in two layers of cord woven together. The zigzag belt 58 has an axial width preferably less than the axial width of the working belts 56, 58. In one embodiment, the zigzag belt reinforcing structure 58 is formed of or comprises relatively high elongation cord or of extensible cord.

The belt structure 50 further includes a rubber layer 60 located between the zigzag belt reinforcing structure 58 and the tire carcass ply 18. The rubber layer 60 has an axial width which is the same or less than the axial width of the zigzag belt reinforcing structure 58. As shown in FIG. 1B, the rubber layer 60 preferably has a variable gauge (i.e., radial thickness), which ranges from 1.5 mm to 4 mm across the axial width of the rubber layer 60. Preferably, the maximum gauge occurs in the center of the tread 12 and decreases to the lateral belt edge either continuously or stepwise.

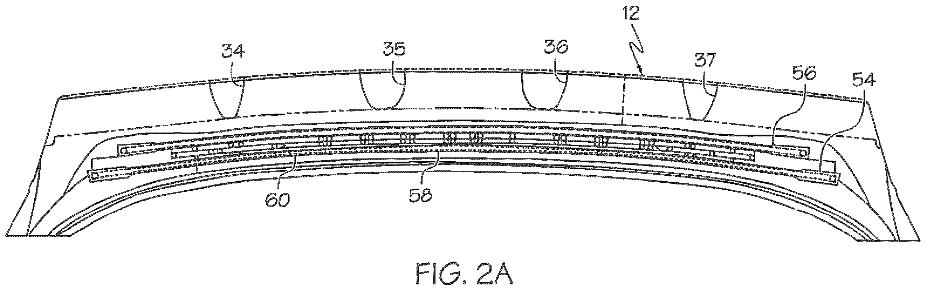

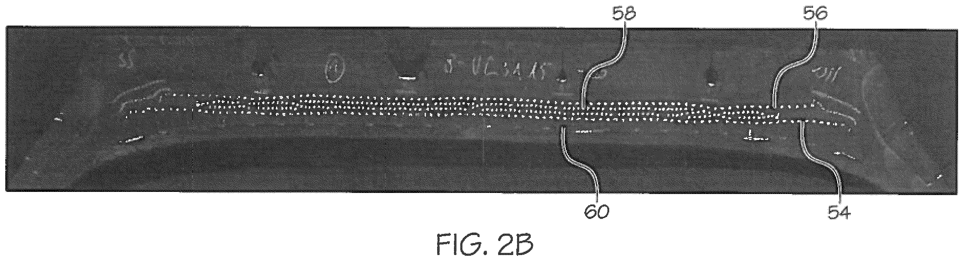

As shown in FIG. 2A and FIG. 2B, the zigzag belt 58 may alternatively also be located between the working belts 54, 56.

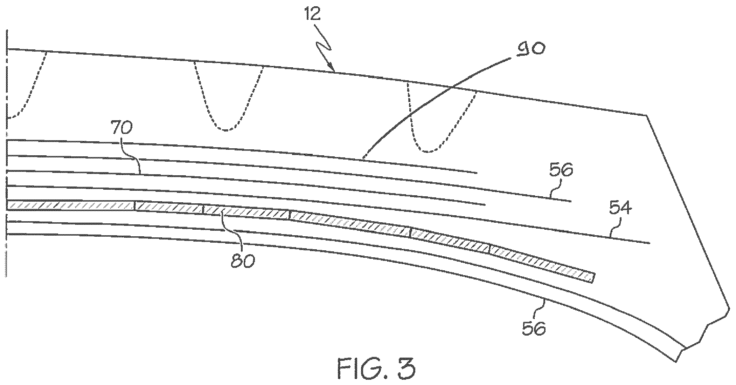

FIG. 3 illustrates a third embodiment wherein a third belt 70 is located between the working belts 54,56 and is a relatively low angle belt 70 with reinforcements that are oriented circumferentially at 5 degrees or less, preferably 0 degrees. The relatively low angle belt 70 is preferably formed from spirally winding a rubberized strip of two or more cords. Alternatively, the belt may be formed of a cut belt with the reinforcements oriented in the range of from 0 to 10 degrees from the circumferential direction. The low angle belt 70 preferably has a width sized to avoid compression in the shoulder area. The belt width of the third belt 58 is preferably in the range of from 70% to 80% of the tread arc width. The relatively low angle belt 70 is preferably formed of relatively high elongation cord or of extensible cord.

Cord or cable or wire is a relatively high elongation cord, cable or wire when it has, under a tensile force equal to 10% of the breaking force, a relative elongation greater than 0.2% or greater than 0.8% or greater than 1.5%, when taken from a cured tire.

Tensile measurements such as the structural elongation (%Ats), elongation at 10% breaking load (%@10%BL), load at break (maximum load in N), strength at break (in MPa) and elongation at break (total elongation in %) are performed in tension in accordance with ISO 6892-1B (2019) at a pre-load no more than 10 MPa tested on a cable or wire when taken from a cured tire.

The belt package 50 further includes a rubber layer 80 located between the carcass ply 18 and the first working belt 54. The rubber layer 80 has an axial width which is less than the width of the first working belt 54. The rubber layer 80 preferably has a variable gauge, which ranges from 1.5 mm to 4 mm across the axial width of the rubber layer 80. Preferably, the maximum gauge occurs in the center of the tread 12 and decreases to the lateral belt edge either continuously or stepwise.

The belt structure 50 may further include an optional overlay belt 90, which is the radially outermost belt of the belt structure 50. Such an optional overlay belt 90 may be applies in any of the embodiments described above.

The aspect ratio of the tire 10 described above may vary. The aspect ratio is preferably in the range of from 50 to 90. The tire preferably has a net to gross ratio in the range of 70 to 90, more preferably in the ratio of 74 to 86, more preferably 78 to 84.

Preferably, the tire 10 is a truck tire and designed for mounting on a 22.5 inch rim (1 inch = 2.54 cm).

## Claims

1. A pneumatic tire for use on trucks, the tire having a tread (12), sidewalls, a carcass a pair of beads, and a belt structure (50) located radially inward of the tread (12), the belt structure (50) comprising a first working belt (54) and a second working belt (56) , the first working belt (54) being located radially inward of the second working belt (56), wherein the angle of the first and second working belts (54, 56) range from 10 degrees to 50 degrees from the circumferential direction, wherein a relatively low angle belt (70) is located radially inward of the first working belt (54) or between the first working belt (54) and the second working belt (56), wherein a rubber spacer layer (60, 80) is located between the first working belt (54) and the carcass of the tire (10), and wherein the gauge or radial thickness of the rubber spacer layer (60, 80) has a maximum in the center of the tread (12) or at an axial distance in a range of from 0 to 30 mm center of the tread (12) and/or wherein the gauge or radial thickness of the rubber spacer layer (60, 80) decreases from the center of the tread (12) towards the lateral belt edges either continuously or stepwise, **characterized in that** the relatively low angle belt (70) comprises extensible reinforcement cords or relatively high elongation reinforcement cords.

2. The tire of claim 1 wherein the gauge or radial thickness of the rubber spacer layer (60, 80) varies in the axial direction.

3. The tire of claim 2 wherein the gauge or radial thickness of the rubber spacer layer (60, 80) varies in a range of 1.5 mm to 4 mm, preferably 1.5 mm to 3 mm, across the axial width of the rubber spacer layer (60, 80).

4. The tire of at least one of the previous claims wherein the first and second working belts (54, 56) comprise extensible reinforcement cords.

5. The tire of at least one of the previous claims wherein the belt structure (50) has only three belts.

6. The pneumatic tire of at least one of the previous claims wherein the relatively low angle belt (70) has reinforcements angled at less than 5 degrees or in a range of from 0 degrees to 2 degrees relative to the circumferential direction of the tire (10).

7. The pneumatic tire of at least one of the previous claims wherein the axial width of the rubber spacer layer (60, 80) is equal to or less than the axial width of the relatively low angle belt (70).

8. The tire of at least one of the previous claims wherein the belt structure (50) further includes an overlay belt (90) as the radially outermost belt of the belt structure (50).

9. The tire of at least one of the previous claims wherein the tire is a truck tire and designed for mounting on a 22.5 inch rim.
